# EUROPEAN PATENT APPLICATION

(11) **EP 2 433 733 A1**
(43) Date of publication of application: **28.03.2012**
(21) Application number: 11182207.8
(22) Date of filing: 21.09.2011
(51) Int. Cl.: B23D 51/10

(54) **Tool having a quick release device**

(30) Priority: 24.09.2010 TW 099132354
(71) Applicant: Basso Industry Corp., Taichung 407 (TW)
(72) Inventor: Lai, Chun-Chih, 407 Taichung (TW)
(74) Representative: Stöckeler, Ferdinand

(57) **Abstract**

A tool includes a body (3) having an insert groove (32) formed in and end surface (31) for insertion of the processing member (2) thereinto, a pressing block (4) disposed within the body (3) and abutting against an inclined surface (35) of the body (3) for pressing against the processing member (2), a controlling member (51) connected pivotally to the body (3) and rotatable about a pivot axis (A), and a connecting member (61) connected fixedly to the pressing block (4) and connected pivotally to the controlling member (51), in such a manner to allow the connecting member (61) and the pressing block (4) to rotate about a connecting axis (B). The controlling member (51) is operable to rotate about the pivot axis (A) to thereby rotate the pressing block (4) about the connecting axis (B) between a first position whereat the processing member (2) is locked in the insert groove (32), and a second position whereat removal of the processing member (2) from the insert groove (32) is allowed.

## Description

This invention relates to a quick release device, and more particularly to a tool having a quick release device for clamping a processing member.

Referring to Figs. 1 and 2, a tool 1 disclosed in U.S. Patent No. 4106181 includes a body 10, a pressing plate 11 disposed movably in the body 10, a saw blade 12 inserted between the body 10 and the pressing plate 11, and a quick release device 13 disposed pivotally on the body 10. The quick release device 13 includes a lever 131 disposed at one end thereof and outwardly of the body 10, and an eccentric block 132 disposed at the other end for pressing against the pressing plate 11.

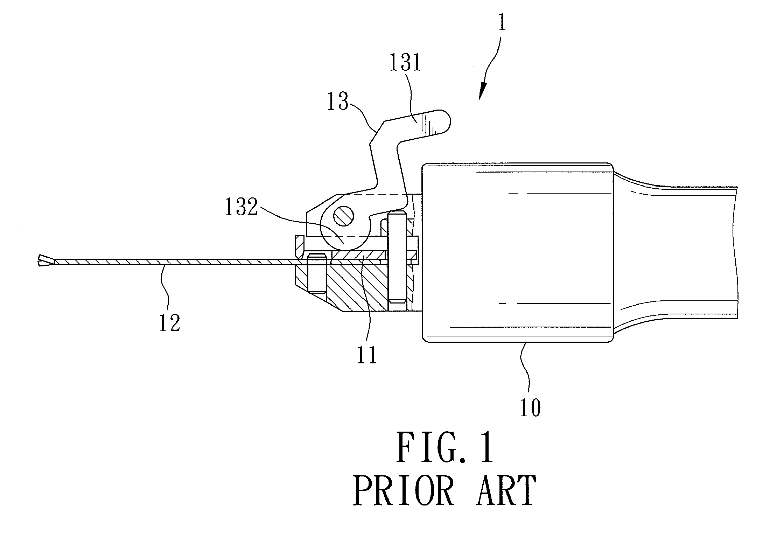

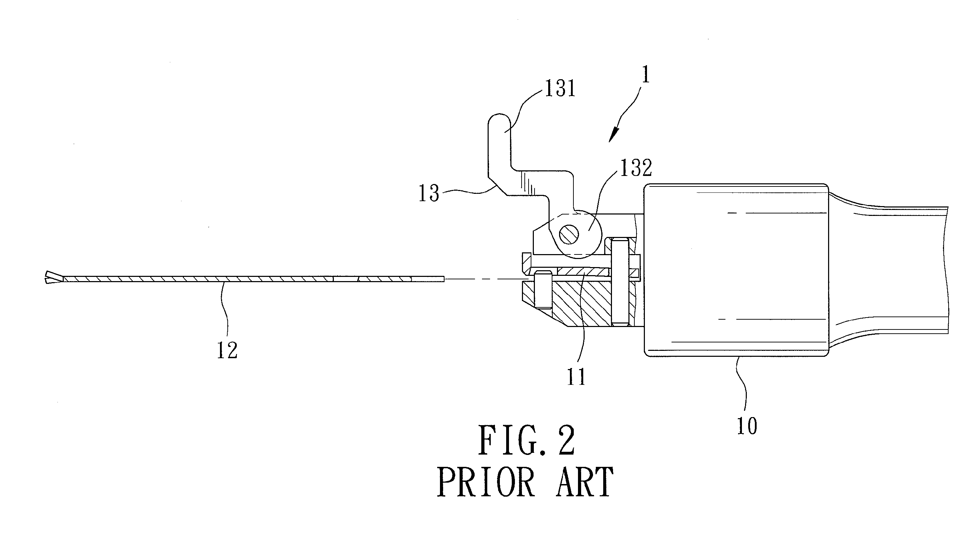

With particular reference to Fig. 1, to clamp the saw blade 12, the lever 131 is rotated clockwise to drive the eccentric block 132 to press the pressing plate 11 against the saw blade 12 to thereby lock the saw blade 12 in the tool 1. With particular reference to Fig. 2, to release the saw blade 12, the lever 131 is rotated counterclockwise to separate the eccentric block 132 from the pressing plate 11 to thereby allow for removal of the saw blade 12.

However, since the eccentric block 132 is eccentric relative to the pivot point between the quick release device 13 and the body 10, during rotation of the eccentric block 132, friction occurring between the eccentric block 132 and the pressing plate 11 is relative large to result in serious wear experienced thereby. As a result, the saw blade 12 cannot be locked effectively in the body 10. Furthermore, due to such eccentric arrangement and, thus, the large friction, it is difficult to rotate the lever 131.

The object of this invention is to provide a tool with a quick release device that can reduce friction to facilitate smooth locking and releasing operation of the quick release device.

According to this invention, a tool includes a body having an insert groove formed in and end surface for insertion of the processing member thereinto, a pressing block disposed within the body and abutting against an inclined surface of the body for pressing against the processing member, a controlling member connected pivotally to the body and rotatable about a pivot axis, and a connecting member connected fixedly to the pressing block and connected pivotally to the controlling member, in such a manner to allow the connecting member and the pressing block to rotate about a connecting axis. The controlling member is operable to rotate about the pivot axis to thereby rotate the pressing block about the connecting axis between a first position whereat the processing member is locked in the insert groove, and a second position whereat removal of the processing member from the insert groove is allowed.

As such, the connecting member cooperates with the inclined surface to move the pressing block toward and away from the processing member, so as to reduce friction occurring between the pressing block and the body, thereby facilitating smooth operation of the controlling member and the pressing block.

These and other features and advantages of this invention will become apparent in the following detailed description of a preferred embodiment of this invention, with reference to the accompanying drawings, in which:
Fig. 1 is a fragmentary, partly sectional side view of a conventional tool disclosed in U.S. Patent No. 4106181, illustrating that a processing member is clamped;
Fig. 2 is a view similar to Fig. 1 but illustrating that the processing member is released;
Fig. 3 is a partly exploded perspective view of the preferred embodiment of a tool according to this invention;
Fig. 4 is an assembled perspective view of the preferred embodiment;
Fig. 5 is a fragmentary sectional view of the preferred embodiment, illustrating that a processing member is clamped; and
Fig. 6 is a view similar to Fig. 5 but illustrating that the processing member is released.

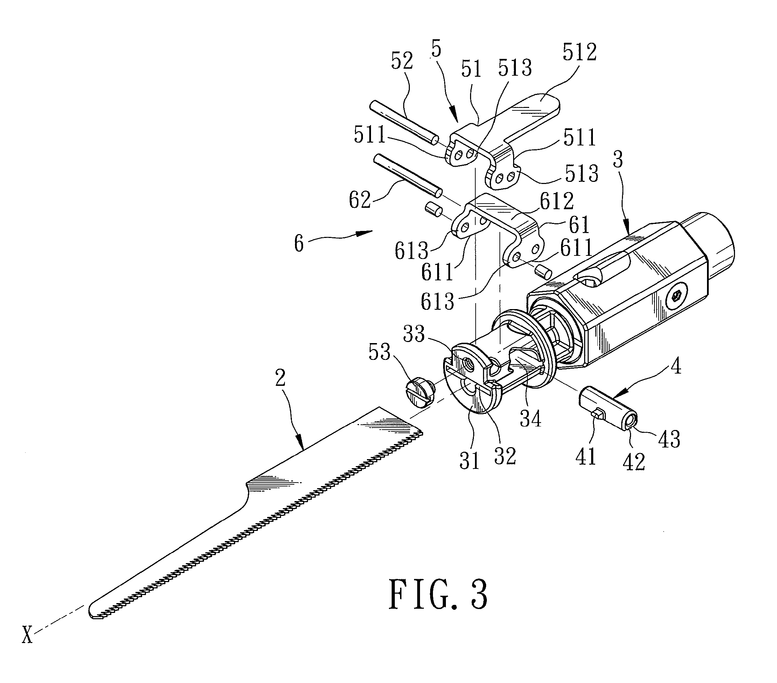

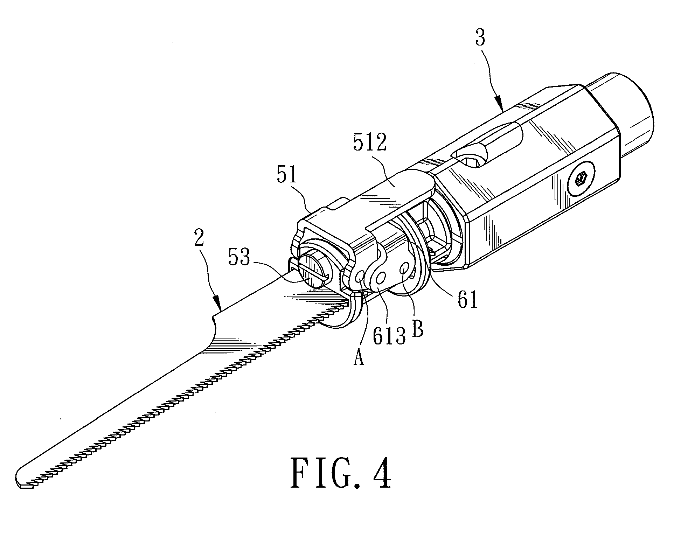

Referring to Figs. 3, 4, and 5, the preferred embodiment of a tool according to this invention is used to clamp a processing member 2, and includes a body 3, a pressing block 4, a controlling unit 5, and a connecting unit 6.

The body 3 has an end surface 31, an insert groove 32 formed in the end surface 31 and extending along a longitudinal axis (X) for insertion of the processing member 2 thereinto, a threaded hole 33 formed in the end surface 31 above the insert groove 32 and extending along the longitudinal axis (X), an accommodating chamber 34 in spatial communication with the insert groove 32, an inclined surface 35 that forms a portion of an inner wall surface defining the accommodating chamber 34 and that faces the insert groove 32, and a stop surface 36 forming another portion of the inner wall surface defining the accommodating chamber 34 and facing the inclined surface 35. The inclined surface 35 is inclined relative to the longitudinal axis (X), and has one end proximate to the end surface 31, and the other end distal from the end surface 31 and nearer to the insert groove 32 than the one end.

The pressing block 4 is disposed within the accommodating chamber 34 in the body 3, abuts against the inclined surface 35, and has a projection 41 extending toward the stop surface 36, and a flat surface 42 formed with a plurality of pressing ribs 43 for pressing against the processing member 2.

The controlling unit 5 includes a controlling member 51, a first pin 52, and an adjustment bolt 53. The controlling member 51 has two side plates 511, and a rotary plate 512 bridging and interconnecting the side plates 511 and disposed outwardly of the body 3 for manual operation. Each of the side plates 511 has a rotating portion 513 at one end thereof. The first pin 52 extends through the other end of each of the side plates 511 and into the body 3 in a direction transverse to the longitudinal axis (X), so as to allow for rotation of the rotating portions 513 of the side plates 511 about a pivot axis (A) that is defined by the central axis of the first pin 52. As such, the controlling member 51 is connected pivotally to the body 3. The adjustment bolt 53 engages the threaded hole 33, and presses against the pin 52, so as to allow the pressing block 4 to abut against the inclined surface 35 of the body 3 and the processing member 2.

The connecting unit 6 includes a connecting member 61 and a second pin 62. The connecting member 61 has two side plates 611, and a connecting plate 612 bridging and interconnecting the side plates 611. Each of the side plates 611 has a pivotal connection portion 613 at one end thereof. The pivotal connection portions 613 of the side plates 611 of the connecting member 61 are connected respectively and pivotally to the rotating portions 513 of the side plates 511 of the controlling member 51. The second pin 62 extends through the pressing block 4 and the other end of each of the side plates 611, in such a manner that the connecting member 61 is connected fixedly to the pressing block 4, so that the pressing block 4 and the connecting member 61 are rotatable about a connecting axis (B) that is defined by the central axis of the second pin 62.

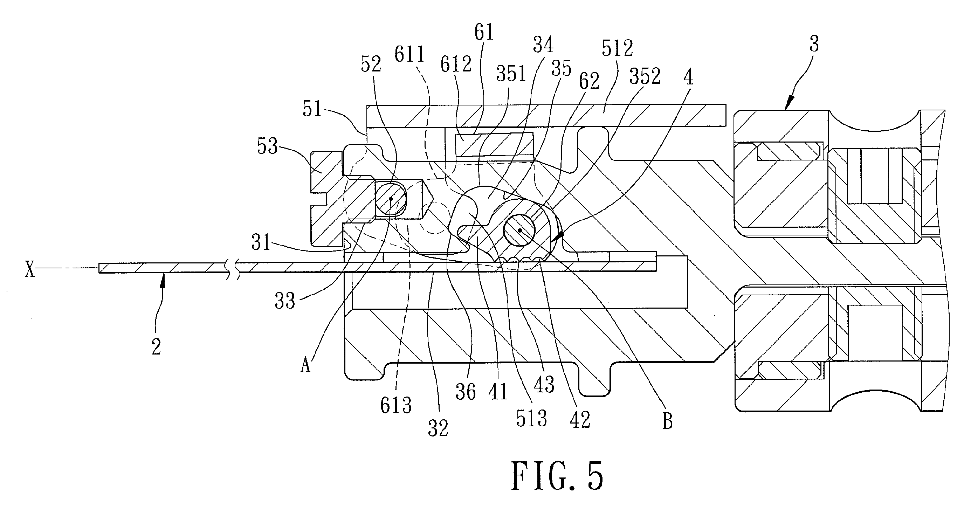

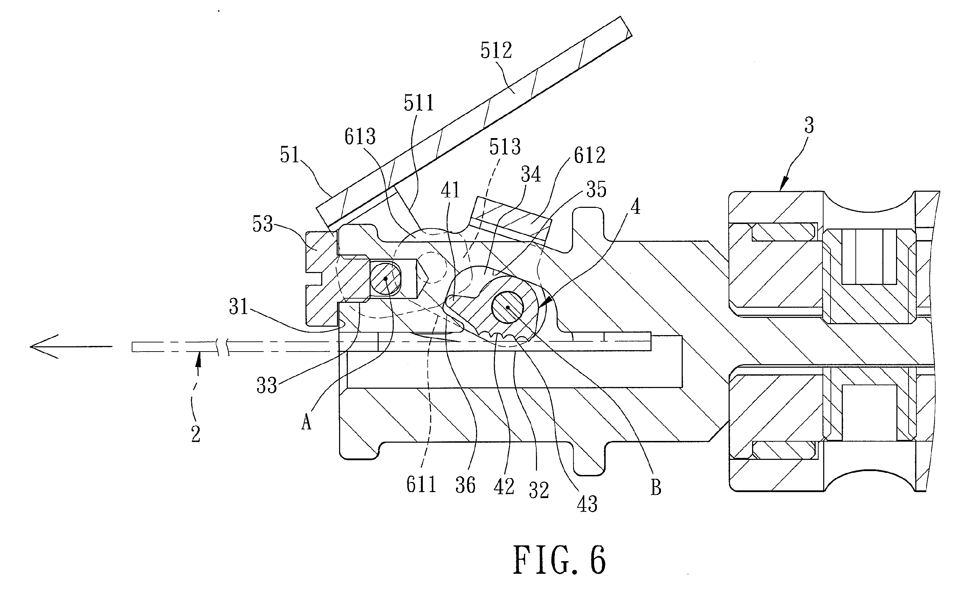

As such, the controlling member 51 is operable to rotate about the pivot axis (A) to thereby rotate the pressing block 4 about the connecting axis (B) between a first position shown in Fig. 5 whereat the processing member 2 is locked in the insert groove 32, and a second position shown in Fig. 6 whereat removal of the processing member 2 from the insert groove 32 is allowed.

When it is desired to lock the processing member 2 in the body 3, the processing member 2 is first inserted into the insert groove 32. Next, the rotary plate 512 of the controlling member 51 is rotated clockwise about the pivot axis (A) toward the body 3. During clockwise rotation of the rotary plate 512, the rotating portions 513 of the controlling unit 5 are rotated toward the processing member 2. Hence, the connecting member 61 is rotated counterclockwise about the connecting axis (B) due to the pivotal connection between the rotating portions 513 of the controlling unit 5 and the pivotal connection portions 613 of the connecting unit 6, so as to move the pressing block 4 toward the processing member 2 along the inclined surface 35 by a small distance. Consequently, the pressing block 4 is also rotated counterclockwise until the projection 41 of the pressing block 4 comes into contact with the stop surface 36 of the body 3, so that all of the pressing ribs 43 of the pressing block 4 are pressed against the processing member 2 to lock the processing member 2 in the insert groove 32. In this state, the rotary plate 512 is at a horizontal position shown in Fig. 5.

When it is desired to release the processing member 2 from the pressing block 4, it is only necessary to rotate the rotary plate 512 in a counterclockwise direction from the horizontal position to an inclined position shown in Fig. 6. Since the rotating portions 513 are connected respectively and pivotally to the pivotal connection portions 613, as described above, counterclockwise rotation of the rotary plate 512 results in clockwise rotation of the pressing block 4 to remove a majority of the pressing ribs 43 of the pressing block 4 from the processing member 2. That is, the processing member 2 is released from the pressing block 4. As such, the processing member 2 can be removed conveniently from the insert groove 32.

It should be noted that, if necessary, the adjustment bolt 53 can be operated to move the first pin 52 along the longitudinal axis (X) for adjusting a pressure applied from the pressing block 4 to the processing member 2.

In view of the above, the connecting member 61 cooperates with the inclined surface 35 to move the pressing block 4 toward and away from the processing member 2, so as to exclude use of any eccentric rotating member required for the above-mentioned prior art. Hence, friction occurring between the pressing block and the body is reduced significantly, thereby facilitating smooth operation of the controlling member 51 and the pressing block 4. Thus, the object of this invention is achieved.

## Claims

1. A tool adapted for clamping a processing member (2), said tool **characterized by**:
a body (3) having an end surface (31), an insert groove (32) that is formed in said end surface (31) and that is adapted for insertion of the processing member (2) thereinto, an accommodating chamber (34) that is in spatial communication with said insert groove (32), and an inclined surface (35) that forms a portion of an inner wall surface defining said accommodating chamber (34) and that faces said insert groove (32);
a pressing block (4) disposed within said accommodating chamber (34) and abutting against said inclined surface (35), said pressing block (4) being adapted for pressing against the processing member (2) ;
a controlling unit (5) including a controlling member (51) connected pivotally to said body (3) and rotatable about a pivot axis (A), said controlling member (51) having at least one rotating portion (513) rotatable about the pivot axis (A); and
a connecting unit (6) including a connecting member (61) connected fixedly to said pressing block (4) and having at least one pivotal connection portion (613) connected pivotally to said rotating portion (513), in such a manner to allow said connecting member (61) and said pressing block (4) to rotate about a connecting axis (B);
wherein said controlling member (51) is operable to rotate about the pivot axis (A) to thereby rotate said pressing block (4) about the connecting axis (B) between a first position whereat the processing member (2) is locked in said insert groove (32), and a second position whereat removal of the processing member (2) from said insert groove (32) is allowed, such that said pressing block (4) moves toward the processing member (2) along said inclined surface (35).

2. The tool as claimed in Claim 1, **characterized in that** said insert groove (32) extends along a longitudinal axis (X), said inclined surface (35) being inclined relative to said longitudinal axis (X) and having one end proximate to said end surface (31), and the other end distal from said end surface (31) and nearer to said insert groove (32) than said one end.

3. The tool as claimed in Claim 1, **characterized in that** said body (3) further has a stop surface (36) forming another portion of the inner wall surface defining said accommodating chamber (34) and facing said inclined surface (35), said pressing block (4) being formed with a projection (41) abutting against said stop surface (36) when said pressing block (4) is at said first position.

4. The tool as claimed in Claim 1, **characterized in that** said pressing block (4) has a flat surface (42) formed with a plurality of pressing ribs (43) adapted for pressing against the processing member (2).

5. The tool as claimed in Claim 1, **characterized in that** said controlling member (51) has two said rotating portions (513), and further has two side plates (511), and a rotary plate (512) bridging and interconnecting said side plates (511) of said controlling member (51), said rotating portions (513) being disposed respectively at said side plates (511) of said controlling member (51).

6. The tool as claimed in Claim 1, **characterized in that** said controlling member (51) further has a rotary plate (512) disposed outwardly of said body (3) for manual operation.

7. The tool as claimed in Claim 6, further **characterized in that** said controlling member (51) further has two side plates (512), said rotary plate (512) bridging and interconnecting said side plates (511).

8. The tool as claimed in Claim 1, **characterized in that** said connecting member (61) has two said pivotal connection portions (613), and further has two side plates (611), and a connecting plate (612) bridging and interconnecting said side plates (611) of said connecting member (61), said pivotal connection portions (613) being disposed respectively at said side plates (611) of said connecting member (61).

9. The tool as claimed in Claim 1, **characterized in that** said body (3) further has a threaded hole (33) formed in said end surface (31), and said controlling unit (5) further includes a pin (52) extending through said controlling member (51) and having a central axis constituting said pivot axis (A), and an adjustment bolt engaging said threaded hole (33) and pressing against said pin (52) so as to allow said pressing block (4) to abut against said inclined surface (35) of said body (3) and the processing member (2).
